**Europäisches Patentamt**

**European Patent Office**

**Office européen des brevets**

(19)

(11) Veröffentlichungsnummer: **0 267 200 B1**

(12) # EUROPÄISCHE PATENTSCHRIFT

(45) Veröffentlichungstag der Patentschrift:
24.04.91 Patentblatt 91/17

(51) Int. Cl.⁵: **F16B 12/26**

(21) Anmeldenummer: **87901309.2**

(22) Anmeldetag: **13.02.87**

(86) Internationale Anmeldenummer:
**PCT/AT87/00008**

(87) Internationale Veröffentlichungsnummer:
**WO 87/06658 05.11.87 Gazette 87/24**

(54) **BESCHLAG ZUM LÖSBAREN VERBINDEN VON ZWEI BAUTEILEN.**

(30) Priorität: **23.04.86 AT 1077/86**

(43) Veröffentlichungstag der Anmeldung:
**18.05.88 Patentblatt 88/20**

(45) Bekanntmachung des Hinweises auf die
Patenterteilung:
**24.04.91 Patentblatt 91/17**

(84) Benannte Vertragsstaaten:
**CH DE FR IT LI**

(56) Entgegenhaltungen:
**DE-A- 2 345 144**
**DE-A- 2 816 134**
**DE-A- 3 304 975**
**US-A- 4 353 663**

(73) Patentinhaber: **FRIEDRICH KNAPP G.M.B.H.**
**Siedlungsstrasse 2**
**A-3300 Amstetten (AT)**

(72) Erfinder: **KNAPP, Friedrich**
**Ignaz Innerhuber-Str. 6**
**A-3300 Amstetten (AT)**

(74) Vertreter: **Weinzinger, Arnulf, Dipl.-Ing. et al**
**Patentanwälte Dipl.-Ing. Helmut Sonn Dr.**
**Heinrich Pawloy Dipl.-Ing. Arnulf Weinzinger**
**Riemergasse 14**
**A-1010 Wien (AT)**

## Beschreibung

Die Erfindung betrifft einen Beschlag zum lösbaren Verbinden von zwei Bauteilen, mit zwei Beschlagteilen, die je einen in eine Vertiefung des einen bzw. anderen Bauteils einzusetzenden fischbauchartigen Grundkörper aufweisen, von dem ein zur gegenseitigen lösbaren Verbindung vorgesehener Eingriffsteil frei auskragend absteht. Derartige Beschläge werden insbesondere zum Verbinden von im rechten Winkel zueinander angeordneten Bauteilen, vor allem Möbelteilen, verwendet.

Herkömmliche Beschläge zum Verbinden von Bauteilen, insbesondere von solchen, die im rechten Winkel zueinander stehen, bestehen zumeist aus einem Bolzen mit Kopf und Gewinde, der einerseits in den einen, insbesondere aus Holz bestehenden Bauteil eingedreht wird und andererseits in ein Gehäuse mit Exzenter oder direkt in einen Exzenterbolzen eingreift, der durch eine Drehung, die z.B. mit einem Schraubendreher durchgeführt wird, die Bauteile, etwa Möbelteile, zusammenzieht und zugleich verriegelt.

Bei allen diesen bekannten Beschlägen ist in der Regel von Nachteil, daß man mit einem Werkzeug, insbesondere einem Schraubendreher, jeweils an den Beschlag herankommen muß, um die Bauteile miteinander zu verbinden oder wieder zu lösen. Dies ist jedoch oft mit Schwierigkeiten verbunden. Ferner ist es fertigungstechnisch aufwendig, diese bekannten Beschläge zu montieren, da sehr genaue Bohrungen notwendig sind, die noch dazu zum Großteil mit verschiedenen Werkzeugen durchgeführt werden müssen. Diese Nachteile treffen auch auf den in der AT-B-378 410 beschriebenen Beschlag zum lösbaren Verbinden zweier Bauteile zu, der aus einem ellipsenförmigen Plättchen mit einem Haltekopf und einem Exzenter zum Verriegeln besteht. Ganz ähnlich, vom Exzenterprinzip her vergleichbare Beschlagsausbildungen sind ferner in der AT-B-294 362, DE-C1-3 204 737 und DE-A1-26 25 182 sowie DE-B-1 215 881 in verschiedenen Ausführungsvarianten beschrieben, wobei sich im Prinzip dieselben Nachteile wie zuvor beschrieben ergeben.

In der AT-B-364 113 ist ein Verbindungsbeschlag in Form eines Dübels mit zwei axial hintereinanderliegenden Befestigungsbereichen, je einer für einen von zwei zu verbindenden Möbelteilen, beschrieben, wobei ein stiftartiger Spreizteil im Inneren des Dübels vorgesehen ist, um dessen Befestigungsbereich beim Verbinden der Möbelteile auseinanderzuspreizen. Von Nachteil ist hier vor allem, daß nur Möbelteile mit exakt zueinander ausgerichteten Bohrungen miteinander verbunden werden können, und daß ein Lösen der miteinander verbundenen Möbelteile praktisch nicht mehr möglich ist.

Aus der DE-A1-28 16 134 ist schließlich ein Verbindungsbeschlag der eingangs angegebenen Art bekannt, bei dem die einzelnen, plattenförmigen, mit Harpunenstegen versehenen Beschlagteile in entsprechend gefräste Nuten in den Bauteilen eingesetzt werden, wonach diese Bauteile in gegenüber der endgültigen Befestigungslage versetzter Stellung aneinander angelegt und sodann längs der aneinanderstoßenden Flächen relativ zueinander verschoben werden, wodurch an den Plattenteilen der Beschlagteile als Eingriffsteile vorgesehene, vorstehende Haken miteinander in Eingriff gebracht werden. Beim Lösen der Bauteile wird in umgekehrter Reihenfolge vorgegangen. Von Nachteil ist dabei, daß ein derartiges Lösen auch unbeabsichtigt relativ leicht erfolgen kann, etwa beim Zusammenbau eines Möbels, wenn erst zwei Plattenteile miteinander verbunden sind, so daß sich dadurch die Montage erschwert oder aber eine unzuverlässige Montage die Folge ist. Ferner muß die Möglichkeit des beschriebenen Verschiebens zum Ineinanderhaken gegeben sein, was aber nicht immer der Fall ist.

Der Erfindung liegt nun die Aufgabe zugrunde, einen Beschlag der eingangs erwähnten Art vorzusehen, bei dem die vorstehend geschilderten Nachteile vermieden sind, und eine einfache fertigungstechnische Montage sowie eine einfache Herstellung und Lösung der Verbindung ermöglicht.

Der erfindungsgemäße Beschlag der eingangs angeführten Art ist dadurch gekennzeichnet, daß der eine Grundkörper als Eingriffsteil einen mit in Umfangsrichtung verlaufenden Schnappverbindungsrillen versehenen Bolzen trägt und am anderen Grundkörper als Eingriffsteil eine federnde Klemme vorgesehen ist, die an ihren Innenflächen wenigstens eine Erhebung für einen Eingriff in eine der Schnappverbindungsrillen am Bolzen aufweist.

Beim erfindungsgemäßen Beschlag greift die wenigstens eine Erhebung an der Innenfläche der Klemme bei der Herstellung der Verbindung der zwei Bauteile Seegerring-artig in eine Schnappverbindungsrille des Bolzens ein, um dadurch den Beschlag bzw. dessen Teile in zumindest einer Richtung zu arretieren. Der Verbindungsvorgang besteht demgemäß im wesentlichen aus einem Einschnappvorgang, was außerordentlich einfach zu bewerkstelligen ist und inbesondere keinerlei Werkzeug benötigt. Weiters wird der Vorteil erzielt, daß der unsichtbare und von außen nicht erreichbare, die Bauteile aber dennoch sicher zusammenhaltende Beschlag jederzeit doch auf einfache Weise wieder gelöst werden kann. Durch Vorsehen von mehreren in Umfangsrichtung verlaufenden Schnappverbindungsrillen übereinander am Bolzen wird überdies die Möglichkeit geschaffen, die gegenseitige Lage von Klemmen und Bolzen in der Höhe des Bolzens je nach Bedarf zu verstellen, so daß die Fuge zwischen den miteinander verbundenen Bauteilen auf diese Weise geregelt werden kann. Dies ist inbesondere dann von Vorteil, wenn der Beschlag als Scharnier oder Schnapper verwendet wird, was grundsätzlich ebenfalls aufgrund der angegebenen Ausbildung möglich ist.

Der mit dem gerillten Bolzen versehene Beschlagteil kann auch für sich allein als Dübellamelle eingesetzt werden, die mit dem fischbauchartigen Grundkörper in eine entsprechende Nut in einem Bauteil und andererseits mit dem dübelartigen Bolzen in eine Sackbohrung in einem anderen Bauteil eingesetzt werden kann. In diesem Zusammenhang ist es erfindungsgemäß von besonderem Vorteil, wenn der Bolzen wenigstens eine Leimrille an seiner Längsseite aufweist. In ähnlicher Weise wie diese Längs-Leimrille dient bzw. dienen im übrigen auch die Querrille(n), d.h. die in Umfangsrichtung verlaufende(n) Rille(n), als Leimrille(n).

Zur Erzielung eines Anschlags beim Einsetzen der Beschlagteile in die entsprechenden Nuten ist es auch günstig, wenn der Bolzen und die Klemme je auf einer am Grundkörper vorgesehenen, verbreiterten Abdeckung aufgebaut sind.

Für ein genaues Positionieren einer Sackbohrung im Fall der Verwendung des einen, mit dem Bolzen versehenen Beschlagteiles als Dübellamelle ist es auch von Vorteil, wenn der Bolzen stirnseitig eine Zentrierspitze aufweist. Die Stirnfläche des Bolzens ist dabei in der Regel abgefast.

Die Erfindung wird nachstehend anhand eines in der Zeichnung veranschaulichten besonders bevorzugten Ausführungsbeispieles noch weiter erläutert. Es zeigen :

Fig. 1 eine axonometrische Ansicht des einen Beschlagteiles, der die Klemme als Eingriffsteil aufweist, und der nachstehend der Einfachheit halber als Klemmlamelle bezeichnet wird, montiert in einem Massivholz-Bauteil ;

Fig. 2 in funktioneller Zuordnung zum Beschlagteil gemäß Fig. 1, in einer entsprechenden axonometrischen Darstellung, den anderen, mit dem Bolzen als Eingriffsteil versehenen Beschlagteil, nachstehend der Einfachheit halber als Dübellamelle bezeichnet, und zwar in einer Stellung, in der diese Dübellamelle zum Teil aus einer kreisbogenförmigen Nut in einem Massivholz-Bauteil herausragt ;

Fig. 3 eine Unteransicht der Klemmlamelle ;

Fig. 4 eine Seitenansicht dieser Klemmlamelle ;

Fig. 5 eine Vorderansicht dieser Klemmlamelle ;

Fig. 6 einen Schnitt durch diese Klemmlamelle gemäß der Linie I-I in Fig. 5 ;

Fig. 7 eine Seitenansicht der Dübellamelle ;

Fig. 8 eine Vorderansicht dieser Dübellamelle ;

Fig. 9 eine Schnittansicht der Dübellamelle gemäß der Linie II-II in Fig. 8 ; und

Fig. 10 eine Draufsicht auf diese Dübellamelle.

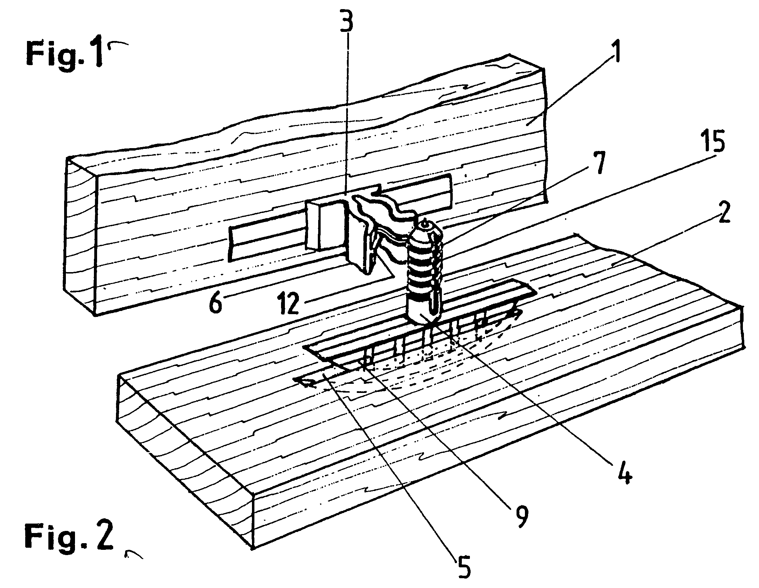

In den zusammen zu betrachtenden Fig. 1 und 2 sind Abschnitte von Massivholz-Bauteilen 1, 2 veranschaulicht, die miteinander durch einen Beschlag zu verbinden sind, wobei die Fig. 1 und 2 zusammen eine Stellung der beiden Bauteile 1, 2 unmittelbar vor dem gewünschten Verbinden zeigen. Jeder Bauteil 1 bzw. 2 ist mit einem Beschlagteil 3 bzw. 4 versehen, wobei der eine Beschlagteil als Klemmlamelle 3 und der andere Beschlagteil als Dübellamelle 4 ausgeführt ist. In jedem Massivholz-Bauteil 1, 2 ist eine kreisbogenförmige Nut 5 (Fig. 2) vorgesehen, in die derjeweilige Beschlagteil 3 bzw. 4 eingesetzt wird. In Fig. 2 ist der Dübellamellen-Beschlagteil 4 nur teilweise in die Nut 5 eingesetzt veranschaulicht, um so die Nut 5 sichtbar zu machen. Die Nuten 5 werden dabei mit einer im Tischlerhandwerk bekannten Nutfräse gefräst, was einfach und rationell bewerkstelligt werden kann.

Zum Verbinden der beiden Beschlagteile 3, 4 und damit der Bauteile 1, 2 werden letztere, wie aus Fig. 1 und 2 gemeinsam ersichtlich ist, einander in Richtung quer zur Achse des Bolzens angenähert, bis eine Schnappverbindung zwischen der Klemmlamelle 3 und der Dübellamelle 4 erfolgt.

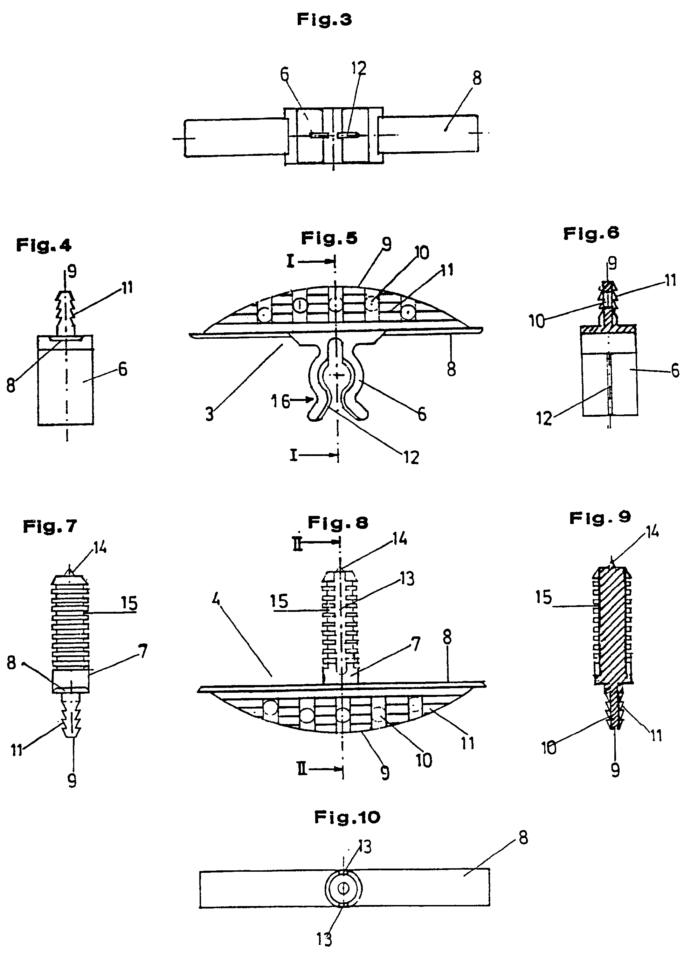

Nachstehend werden die beiden Beschlagteile 3, 4 anhand der Fig. 3 bis 6 bzw. 7 bis 10 noch näher erläutert.

Wie aus den Fig. 3 bis 6 ersichtlich ist, besitzt der als Klemmlamelle ausgebildete Beschlagteil 3 eine aus federnd auslenkbaren Wänden bestehende Klemme 6, die auf einer Abdeckung 8 eines fischbauchartigen Grundkörpers 9 aufgebaut ist, der mit Leimkanälen 10 sowie Harpunenstegen 11 versehen ist. Eine derartige Ausbildung mit Leimkanälen und Harpunenstegen dient zur verstärkten Haftung des Grundkörpers 9 in der Nut 5 (Fig. 2).

An den Innenflächen der Wände der Klemme 6 ist eine leisten- oder rippenförmige Erhebung 12 vorgesehen, deren Zweck nachstehend noch näher erläutert werden wird.

Gemäß Fig. 7 bis 10 weist der als Dübellamelle ausgebildete Beschlagteil 4 einen in entsprechender Weise an einer plattenartigen Abdeckung 8 eines fischbauchartigen Grundkörpers 9, der mit Leimkanälen 10 und Harpunenstegen 11 versehen ist, aufgebauten dübelartigen Bolzen 7 auf, der längsseitig für die Verwendung als Dübel mit Leimrillen 13 sowie mit einer Zentrierspitze 14 und ferner mit wenigstens einer, im dargestellten Ausführungsbeispiel mit einer Vielzahl von sich in Umfangsrichtung erstreckenden Rillen 15 versehen ist.

In eine dieser Rillen 15 schnappt bei Herstellung der Verbindung die Klemme 6 des anderen Beschlagteiles 3 mit der leistenförmigen Erhebung 12 an ihrer Innenfläche ein, wodurch die gewünschte Schnappverbindung hergestellt wird. Dabei werden bei Einschieben des Bolzens 6 zwischen die divergierenden Abschnitte der Klemme 6 die kreisbogenförmig gebogenen Wandabschnitte der Klemme 6 zunächst auseinandergebogen, bis der Bolzen 7 die bei 16 in Fig. 5 veranschaulichte Engstelle passiert hat, wonach die beiden Wände der Klemme 6 in ihre ursprüngliche Lage federnd zurückschnappen und dabei den Bolzen 7 festhalten.

Es ist auch möglich, nur eine Querrille 15 am Bolzen 7 vorzusehen ; auch könnten die Zentrierspitze 14 und die Längs-Leimrillen 13 am Bolzen 7 weggelassen werden, wenn die Dübellamelle 4 nicht für sich allein zum Einsatz kommen soll.

## Ansprüche

1. Beschlag zum lösbaren Verbinden von zwei Bauteilen (1, 2), mit zwei Beschlagteilen (3, 4), die je einen in eine Vertiefung des einen bzw. anderen Bauteils einzusetzenden fischbauchartigen Grundkörper (9) aufweisen, von dem ein zur gegenseitigen lösbaren Verbindung vorgesehener Eingriffsteil frei auskragend absteht, dadurch gekennzeichnet, daß der eine Grundkörper als Eingriffsteil einen mit in Umfangsrichtung verlaufenden Schnappverbindungsrillen (15) versehenen Bolzen (7) trägt und am anderen Grundkörper als Eingriffsteil eine federnde Klemme (6) vorgesehen ist, die an ihren Innenflächen wenigstens eine Erhebung (12) für einen Eingriff in eine der Schnappverbindungsrillen (15) am Bolzen (7) aufweist.

2. Beschlag nach Anspruch 1, dadurch gekennzeichnet, daß der Bolzen (7) wenigstens eine Leimrille (13) an seiner Längsseite aufweist.

3. Beschlag nach Anspruch 1 oder 2, dadurch gekennzeichnet, daß der Bolzen (7) und die Klemme (6) je auf einer am Grundkörper (9) vorgesehenen, verbreiterten Abdeckung (8) aufgebaut sind.

4. Beschlag nach einem der Ansprüche 1 bis 3, dadurch gekennzeichnet, daß der Bolzen (7) stirnseitig eine Zentrierspitze (14) aufweist.

## Claims

1. A fitting for releasable connection of two components (1, 2) with two fitting parts (3, 4), which each have a fish-belly-like basic body (9) to be inserted into a recess of one or the other component, from which there projects in a free and cantilevered manner an engaging part provided for mutual releasable connection, characterised in that the one basic body, as engaging part supports a bolt (7) provided with snap connection grooves (15) extending in the circumferential direction, and provided on the other basic body as engaging part there is a spring clamp (6), which has on its inner faces at least one elevation (12) for engagement into one of the snap connection grooves (15) on the bolt (7).

2. A fitting according to claim 1, characterised in that the bolt (7) has at least one glue groove (13) on its longitudinal side.

3. A fitting according to claim 1, characterised in that the bolt (7) and the clamp (6) are each constructed on a broadened cover (8), provided on the basic body (9).

4. A fitting according to one of claims 1 to 3, characterised in that the bolt (7) has on the front side a centering point (14).

## Revendications

1. Elément d'assemblage pour l'assemblage amovible dedeux modules ou éléments de construction (1, 2) munis de deux pièces d'assemblage (3, 4), qui comportent chacune un corps de base (9) du genre à ventre de poisson et à engager dans une cavité de l'un ou l'autre module de construction et d'où sort, en saillie libre, une partie d'attache ou de liaison prévue pour assurer la liaison amovible avec l'autre pièce, caractérisé en ce que l'un des corps de base porte, comme pièce de liaison ou d'attache, une cheville (7) munie à sa périphérie de rainures (15) de liaison par encliquetage et en ce que, sur l'autre corps de base, est prévue comme pièce de liaison ou d'attache, une pince élastique (6) qui comporte, sur ses surfaces intérieures, au moins une surélévation (12) destinée à pénétrer dans l'une des rainures (15) de liaison par encliquetage, prévues sur la cheville (7).

2. Elément d'assemblage selon la revendication 1, caractérisé en ce que la cheville (7) comporte au moins une rainure à colle (13) sur sa face longitudinale.

3. Elément d'assemblage selon la revendication 1 ou 2, caractérisé en ce que la cheville (7) et la pince (6) sont montées chacune sur un revêtement (8) prévu sur le corps de base (9) et qui s'élargit sur celui-ci.

4. Elément d'assemblage selon l'une des revendications 1 à 3, caractérisé en ce que la cheville (7) comporte frontalement une pièce de centrage (14).

Fig.1

Fig.2

## Fig.3

6    12    8

## Fig.4

9    11    8    6

## Fig.5

I    9    10    11
3    16    6    6    12
I

## Fig.6

9    11    10    6    12

## Fig.7

14    15    8    7    11    9

## Fig.8

II    14    13    15    4    7    8    11    10    9    II

## Fig.9

14    15    10    9    11

## Fig.10

13    8    13

6